# FASCICULE DE BREVET EUROPEEN

(11) **EP 1 451 463 B1**
(45) Date de publication et mention de la délivrance du brevet: **01.08.2007**
(21) Numéro de dépôt: 02790548.8
(22) Date de dépôt: 29.10.2002
(51) Int. Cl.: F02M 21/06, F02M 31/10

(54) **SUPPORT DE THERMOSTAT REGULATEUR DE MOTEUR THERMIQUE AVEC CIRCUIT EXTERNE D'EAU CHAUDE**
THERMOSTATREGLER FÜR EINE BRENNKRAFTMASCHINE MIT WASSERKÜHLUNG
REGULATOR THERMOSTAT SUPPORT OF HEAT ENGINE WITH EXTERNAL HOT WATER CIRCUIT

(30) Priorité: 07.12.2001 FR 0115822
(43) Date de publication de la demande: 01.09.2004
(73) Titulaire: Di Gennaro, Antoine, 83000 Toulon (FR)
(72) Inventeur: Di Gennaro, Antoine, 83000 Toulon (FR)
(86) Numéro de dépôt international: PCT/FR2002/003705
(87) Numéro de publication internationale: WO 2003/048556

(56) Documents cités:
- FR-A- 2 757 217
- US-A- 5 483 943
- US-A- 6 026 789

## Description

La présente invention a pour objet un support de calorstat de moteur thermique avec circuit externe d'eau chaude.

Il est destiné à assurer l'apport des calories nécessaires au préchauffage du gaz de pétrole liquéfié (G.P.L.), ou autre carburant, utilisé en particulier pour les moteurs marins de tous types, à deux ou quatre temps, à carburateur ou à injection, hors bord ou in bord, mais peut éventuellement être utilisé pour des moteurs terrestres ou pour d'autres applications.

Le G.P.L. est de plus en plus utilisé comme source d'énergie pour les moteurs à explosions. Ce carburant présente l'avantage de ne produire qu'une très faible pollution et est soumis à une taxation plus avantageuse que celle appliquée aux autres carburant.
L'emploi de gaz liquéfié pour faire fonctionner un moteur initialement conçu pour recevoir un carburant liquide nécessite l'utilisation d'un dispositif spécifique assurant la vaporisation du gaz sous une pression et avec un débit déterminés.
Ce dispositif se présente sous la forme d'un boîtier comportant une double enceinte formée d'une chambre de vaporisation du gaz et d'une chambre thermique dans laquelle circule un liquide chaud qui est généralement constitué par l'eau de refroidissement du moteur prélevée grâce à une dérivation pratiquée sur le circuit reliant celui-ci au radiateur.

Les moteurs à refroidissement dit à l'eau comportent un circuit fermé étanche contenant une solution aqueuse renfermant des additifs anticorrosion et de l'antigel. Le liquide de refroidissement se réchauffe à l'intérieur même du bloc-moteur. Il est ensuite pompé à la partie supérieure d'un échangeur eau-air, appelé radiateur, et - après refroidissement - retourne au moteur. Son débit est contrôlé par un thermostat à action directe situé à la sortie du bloc-moteur, le calorstat, qui ferme le circuit, à froid, pour accélérer la mise en température du liquide, au démarrage, jusqu'à sa température optimale, et qui s'ouvre ensuite pour maintenir constante cette température.

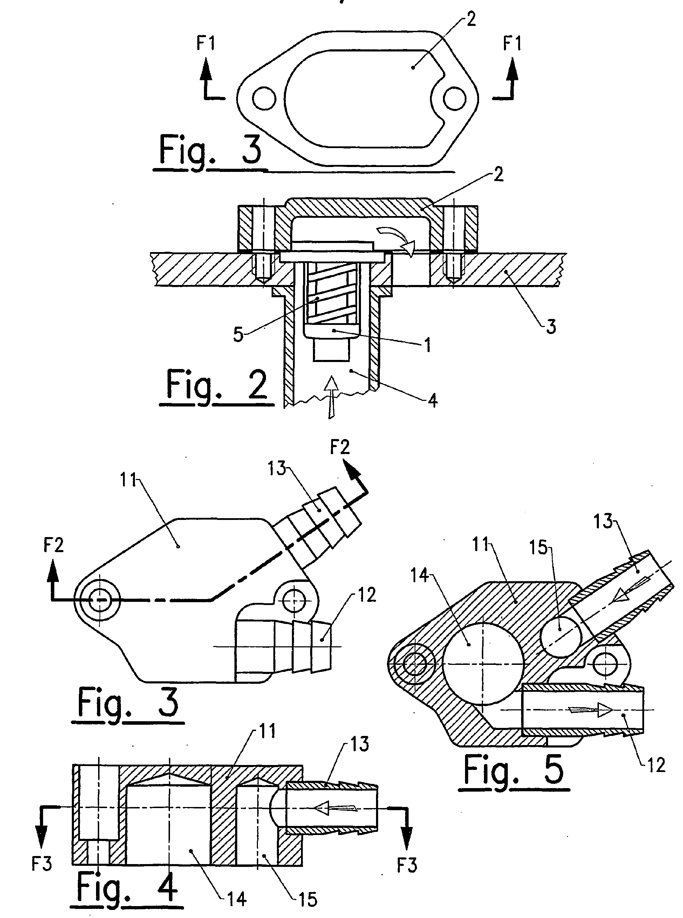

Le calorstat 1 est monté sur un support 2 fixé sur le bloc-moteur 3 et communiquant avec la tuyauterie 4 de refoulement de la pompe à eau. Il comporte un bulbe déformable à soufflet et ressort 5, côté pompe, qui commande le clapet d'un robinet élémentaire (figures 1 et 2). A froid, ce robinet est fermé. Lorsque le moteur commence à tourner, la température de l'eau de refroidissement du bloc-moteur monte rapidement, en l'absence de toute circulation; lorsque la température normale de l'eau est atteinte, le robinet s'entrouvre et amorce la circulation d'eau en circuit fermé, via le radiateur. L'ouverture se module ensuite automatiquement en fonction de la charge du moteur et des conditions de fonctionnement du radiateur.

Il existe plusieurs dispositifs connus, comme par exemple décrit dans le brevet US-60 26 789 utilisant le liquide de refroidissement du moteur pour assurer le préchauffage du G.P.L. A titre d'exemple le brevet N° FR 2 757 217 décrit un boîtier de vaporisation du gaz liquéfié comportant, à l'intérieur de la chambre thermique, une enceinte ou un circuit tubulaire raccordé à l'arrivée et au départ d'eau de refroidissement du moteur.

Le liquide de refroidissement met un temps assez long pour atteindre la température nécessaire pour vaporiser le gaz liquéfié, en particulier par temps froid. De plus, cette température varie en fonction du régime du moteur.

Le dispositif selon la présente invention a pour but de remédier à ces inconvénients. En effet, il peut être installé facilement et rapidement sur un vaporisateur de gaz liquéfié existant et permet de disposer d'une source calorifique à température constante pour le préchauffage du gaz liquéfié.

Il est constitué d'un support de calorstat spécifique remplaçant le support existant et comportant des moyens permettant de monter une double tubulure reliant ledit support au système de vaporisation du gaz liquéfié ou à un autre équipement consommateur de calories, cette tubulure constituant une dérivation du liquide de refroidissement du moteur et le support de calorstat étant agencé de manière à ce que le débit dans cette tubulure soit contrôlé par le calorstat.

Sur les dessins annexés, donnés à titre d'exemple non limitatif d'une forme de réalisation conforme à la présente demande :
les figures 1 et 2 représentent un support de calorstat de type connu, vu respectivement de dessus et en coupe suivant les flèches F1,
la figure 3 est une vue de dessus du support de calorstat selon l'invention,
la figure 4 est une coupe suivant les flèches F2 de la figure 3
et la figure 5 est une coupe suivant les flèches F3 de la figure 4.

Le dispositif, figures 3 à 5, est constitué d'un boîtier support 11 de calorstat 1 pourvu d'un embout de sortie 12 et d'un embout de retour 13 permettant de raccorder deux tubes destinés à relier le boîtier support à la chambre thermique du système de vaporisation du G.P.L.

Le boîtier support 11 est pourvu d'une embase identique à celle du support 2 normal permettant de le monter à la place de celui-ci. Il comporte à l'intérieur deux compartiments séparés de façon étanche : un compartiment de sortie 14, situé derrière le calorstat 1 et communiquant avec le robinet de ce dernier ainsi qu'avec l'embout de sortie 12, et un compartiment de retour 15 communiquant avec avec l'enceinte du bloc moteur 3 et l'embout de retour 13.

Le boîtier support sera de préférence fabriqué en fonte d'alliage léger, mais peut être réalisé en tout autre matériau adéquat en en particulier en matière synthétique résistant à la chaleur.

Pour certaines applications, il est possible de prévoir un by-pass interne ou externe au boîtier support 11 entre le circuit de sortie et le circuit de retour et permettant d'isoler le dispositif en supprimant la circulation externe du liquide de refroidissement, quel que soit l'état du calorstat 1.

Le système ne nuit en rien au fonctionnement du moteur. Au démarrage, le calorstat 1 est fermé et interdit toute circulation de fluide dans les tubulures branchées sur les embouts 12, 13 de sortie et de retour, l'élévation de température du G.P.L. étant obtenue par un système de préchauffage, par exemple électrique.
Lorsque le liquide de refroidissement est suffisamment chaud, le calorstat s'ouvre et permet à la circulation du fluide de s'établir dans le circuit externe au boîtier support 11 et les calories prélevées par le système de vaporisation du gaz liquéfié auront pour effet d'améliorer l'efficacité du système de refroidissement du moteur.

Le positionnement des divers éléments constitutifs donne à l'objet de l'invention un maximum d'effets utiles qui n'avaient pas été, à ce jour, obtenus par des dispositifs similaires.

## Revendications

1. Support de thermostat régulateur de moteur thermique avec circuit externe d'eau chaude, dont la fonction est d'assurer l'apport des calories nécessaires au préchauffage du gaz de pétrole liquéfié (G.P.L.) Ou autre carburant, grâce à une double tubulure le reliant à la chambre thermique du système de vaporisation, destiné en particulier aux moteurs marins de tous types, mais pouvant éventuellement être utilisé pour des moteurs terrestres ou pour d'autres applications,
**caractérisé en ce qu'**il est constitué d'un boîtier support (11) spécifique pourvu d'une embase identique à celle d'un support (2) de type courant de façon à permettre de le monter à la place de celui-ci, et **en ce qu'**il comporte à l'intérieur deux compartiments séparés de façon étanche : un compartiment de sortie (14), situé derrière le thermostat régulateur (1) et communiquant avec le robinet de ce dernier ainsi qu'avec un embout de sortie (12), et un compartiment de retour (15) communiquant avec un embout de retour (13) et l'enceinte du bloc moteur (3).

2. Support de thermostat régulateur selon la revendication 1, **se caractérisant par le fait qu'**il est agencé de manière à ce que le débit dans la double tubulure le reliant à la chambre thermique du système de vaporisation soit contrôlé par le thermostat régulateur (1).

3. Support de thermostat régulateur selon l'une quelconque des revendications précédentes, **se caractérisant par le fait qu'**il est équipé d'un by-pass entre le circuit de sortie et le circuit de retour et permettant d'isoler le dispositif en supprimant la circulation externe du liquide de refroidissement quel que soit l'état du thermostat régulateur (1).

4. Support de thermostat régulateur selon la revendication 3, **se caractérisant par le fait que** le by-pass est interne au boîtier support (11).

5. Support de thermostat régulateur selon la revendication 3, **se caractérisant par le fait que** le by-pass est externe au boîtier support (11).

6. Support de thermostat régulateur selon l'une quelconque des revendications précédentes, **se caractérisant par le fait qu'**il est réalisé en fonte d'alliage léger.

7. Support de thermostat régulateur selon l'une quelconque des revendications 1 à 5, **se caractérisant par le fait qu'**il est réalisé en matière synthétique résistant à la chaleur.

## Claims

1. A regulator thermostat support of heat engine with external hot water circuit, the function of which is to ensure the heat input required to preheat the liquefied petroleum gas (LPG) or other fuel, thanks to a double branch pipe linking it to the heat chamber of the vaporization system, intended in particular for marine engines of any types, but which can possibly be used for land engines or for other applications,
**characterized in that** it consists of a specific housing support (11) equipped with a base identical to that of a support (2) of common type so as to enable it to be mounted in the place of the latter, and **in that** it comprises two compartments inside separated in a watertight manner: one output compartment (14), located behind the regulator thermostat (1) and communicating with the valve thereof as well as with an output end piece (12), and a return compartment (15) communicating with a return end piece (13) and the inside of the engine block (3).

2. Regulator thermostat support according to claim 1, **characterized in that** it is arranged so that the flow rate in the double branch pipe linking it to the heat chamber of the vaporization system is controlled by the regulator thermostat (1).

3. Regulator thermostat support according to any one of the previous claims, **characterized in that** it is equipped with a by-pass between the output circuit and the return circuit and enabling the device to be isolated by removing the external flow of the coolant whatever the state of the regulator thermostat (1).

4. Regulator thermostat support according to claim 3, **characterized in that** the by-pass is internal to the housing support (11).

5. Regulator thermostat support according to claim 3, **characterized in that** the by-pass is external to the housing support (11).

6. Regulator thermostat support according to any one of the previous claims, **characterized in that** it is made of cast light alloy.

7. Regulator thermostat support according to any one of claims 1 to 5, **characterized in that** it is made of heat-resistant synthetic material.

## Patentansprüche

1. Regulierungsthermostathalter für Wärmemaschinen mit externem Heißwasserkreis, mit der Funktion, die notwendige Wärmezufuhr zum Vorheizen des Flüssiggases (GPL) oder eines anderen Kraftstoffes zu gewährleisten, und dies anhand eines Doppelrohres, das ihn mit der Heizkammer des Verdampfungssystems verbindet, der insbesondere für Schiffsmotoren jedweden Typs gedacht ist, gegebenenfalls jedoch für Landmotoren oder andere Anwendungen eingesetzt werden kann,
**dadurch gekennzeichnet, dass** er ein spezifisches Haltergehäuse (11) umfasst, das mit einer Basis versehen ist, die derjenigen eines üblichen Halters (2) entspricht, um es somit zu ermöglichen, ihn an dessen Stelle zu montieren, und **dadurch** dass er im Inneren zwei auf wasserdichte Art und Weise getrennte Abteile umfasst: ein Ausgabeabteil (14), das sich hinter dem Regulierungsthermostat (1) befindet und mit dessen Ventil und mit einem Ausgabeendteil (12) kommuniziert, und ein Rücklaufabteil (15), das mit einem Rücklaufendteil (13) und dem Inneren des Motorblocks (3) kommuniziert.

2. Regulierungsthermostathalter nach Anspruch 1, **dadurch gekennzeichnet, dass** er derart angeordnet ist, dass der Durchsatz im Doppelrohr, das ihn mit der Heizkammer des Verdampfungssystems verbindet, vom Regulierungsthermostat (1) kontrolliert wird.

3. Regulierungsthermostathalter nach einem der vorhergehenden Ansprüche, **dadurch gekennzeichnet, dass** er zwischen dem Ausgabekreis und dem Rücklaufkreis mit einem Bypass ausgerüstet ist, der es erlaubt, die Vorrichtung zu isolieren, indem die externe Strömung der Kühlflüssigkeit unabhängig vom Zustand des Regulierungsthermostats (1) entfernt wird.

4. Regulierungsthermostathalter nach Anspruch 3, **dadurch gekennzeichnet, dass** der Bypass innerhalb des Haltergehäuses (11) ist.

5. Regulierungsthermostathalter nach Anspruch 3, **dadurch gekennzeichnet, dass** der Bypass außerhalb des Haltergehäuses ist (11).

6. Regulierungsthermostathalter nach einem der vorhergehenden Ansprüche, **dadurch gekennzeichnet, dass** er aus Leichtmetalllegierung hergestellt ist.

7. Regulierungsthermostathalter nach einem der Ansprüche 1 bis 5, **dadurch gekennzeichnet, dass** er aus hitzebeständigem Kunststoff hergestellt ist.
